# FASCICULE DE BREVET EUROPEEN

(11) **EP 3 170 708 B1**
(45) Date de publication et mention de la délivrance du brevet: **11.03.2020**
(21) Numéro de dépôt: 16195362.5
(22) Date de dépôt: 24.10.2016
(51) Int. Cl.: B60S 1/40, B60S 1/38

(54) **ENSEMBLE FORME D'UN BRAS D'ENTRAINEMENT ET D'UN CONNECTEUR POUR ESSUIE-GLACE**
EINHEIT AUS EINEM ANTRIEBSARM UND EINEM ANSCHLUSS FÜR EINEN SCHEIBENWISCHER
ASSEMBLY MADE UP OF A DRIVE ARM AND A CONNECTOR FOR A WINDSCREEN WIPER

(30) Priorité: 17.11.2015 FR 1561074
(43) Date de publication de la demande: 24.05.2017
(73) Titulaire: Valeo Systèmes d'Essuyage, 78322 Le Mesnil Saint Denis (FR)
(72) Inventeur: POTON, Eric, 63430 Pont du Château (FR); HOUSSAT, Stéphane, 63112 BLANZAT (FR); GAUCHER, Vincent, 63720 ENNEZAT (FR)
(74) Mandataire: Valeo Systèmes d'Essuyage

(56) Documents cités:
- EP-A1- 2 229 301
- WO-A1-2010/016000
- DE-U1- 20 122 773
- US-A1- 2014 325 785

## Description

La présente invention se rapporte aux systèmes d'essuyage pour véhicules automobiles, et concerne plus particulièrement un ensemble formé d'un bras d'entraînement et d'un connecteur constitutif du système d'essuyage.

Les systèmes d'essuyage, couramment dénommés essuie-glaces, pour véhicules automobiles sont conçus pour retirer, par balayage, les liquides et salissures qui peuvent perturber la vision que le conducteur a de son environnement. Ces essuie-glaces comprennent généralement un bras d'entraînement qui effectue un mouvement de va-et-vient angulaire autour d'un axe de rotation, et un balai d'essuyage allongé équipé d'une lame racleuse réalisée en un matériau élastique. En frottant contre une surface vitrée, avant ou arrière, du véhicule automobile, la lame racleuse en balaie l'eau et un certain nombre de salissures, et les évacue en dehors du champ de vision du conducteur.

Quelle que soit la configuration du balai d'essuyage, c'est-à-dire soit un balai d'essuyage comportant des étriers articulés qui retiennent la lame racleuse en plusieurs zones distinctes, soit un balai d'essuyage comportant une lame métallique qui maintient la lame racleuse sur toute sa longueur, le balai d'essuyage est rattaché au bras d'entraînement par un dispositif d'assemblage qui comprend au moins un connecteur monté solidaire du balai d'essuyage.

Dans un premier mode de liaison connu, un adaptateur, apte à être assemblé avec le connecteur du balai d'essuyage, est monté sur une pièce terminale du bras d'entraînement. Ce premier mode de liaison est couramment utilisé pour les essuie-glaces destinés aux surfaces vitrées situées à l'avant du véhicule automobile (pare-brise). Dans un deuxième mode de liaison connu, le connecteur est raccordé à un arbre solidaire du bras d'entraînement. Le connecteur est monté mobile en rotation autour de l'arbre du bras d'entraînement. Ce deuxième mode de liaison est couramment rencontré dans les essuie-glaces destinés aux surfaces vitrées situées à l'arrière du véhicule (lunette arrière).

L'état de la technique le plus proche est formé par le document EP2229301 B1 qui décrit un essuie-glace comprenant un connecteur qui est prévu pour porter le balai d'essuyage. Le connecteur comprend une embase et un corps qui s'étend au-dessus de l'embase. L'embase comporte des moyens de solidarisation du connecteur au balai d'essuyage.

Une telle connexion ne peut pas se transférer aisément entre un balai d'essuyage avant et un balai d'essuyage arrière. En effet, le connecteur et l'adaptateur d'une connexion arrière sont significativement plus petits. Les reprises d'efforts transversaux entre le balai d'essuyage et le bras d'entraînement sont donc plus compliquées à mettre en œuvre, tout en conservant une mobilité en rotation entre l'adaptateur et le connecteur. Cette problématique de reprise d'efforts transversaux existe également à l'égard d'un pare-brise de véhicule, et la solution de l'invention s'applique également à une connexion entre un balai d'essuyage avant et un bras d'entraînement avant.

La présente invention a pour but d'améliorer cette situation en proposant un connecteur et un bras d'entraînement qui sont agencés pour sécuriser une liaison mécanique entre le connecteur et le bras d'entraînement, la liaison mécanique autorisant une rotation du connecteur autour de l'arbre du bras d'entraînement, tout en garantissant une absence de jeu transversal entre ces composants. Une telle connexion doit également être fiable, pérenne et ergonomique.

Dans ce but, l'invention a pour objet un ensemble formé d'un bras d'entraînement et d'un connecteur. Le connecteur est pourvu d'au moins un palier de réception d'un arbre du bras d'entraînement. Le connecteur comprend une embase adapté pour porter le balai d'essuyage et surmontée d'un corps agencé pour recevoir l'arbre. Le corps comporte deux surfaces externes distantes l'une de l'autre d'une première largeur. L'embase comporte deux faces externes distantes l'une de l'autre d'une deuxième largeur qui est supérieure à la première largeur. L'arbre s'étend selon un axe d'arbre entre des surfaces internes du bras d'entraînement. Ces largeurs sont mesurées le long d'un axe transversal passant par l'axe de l'arbre.

Selon la présente invention, ledit ensemble est équipé d'un dispositif de blocage d'un mouvement transversal du connecteur le long de l'axe d'arbre qui associe au moins une face externe et au moins une surface interne en contact l'une avec l'autre. Un mouvement transversal est ainsi empêché entre le bras d'entraînement et le connecteur.

Ledit ensemble présente avantageusement l'une quelconque des caractéristiques suivantes, prise seule ou en combinaison :
- le dispositif de blocage est un dispositif de blocage d'un mouvement en rotation du connecteur autour d'un axe orthogonal à l'axe d'arbre. Une telle disposition est intéressante car elle empêche tout mouvement de balancier du balai d'essuyage au bout du bras, dans le plan de la surface vitrée,
- le dispositif de blocage comprend deux faces externes du connecteur et deux surfaces internes du bras d'entraînement. L'empêchement transversal est ainsi opéré dans les deux sens de l'axe de l'arbre,
- la face externe et la surface interne sont parallèles l'une à l'autre et parallèle à un premier plan de symétrie du connecteur,
- la face externe et la surface interne sont polies,
- la face externe et la surface interne sont conformées en un parallélogramme,
- la face externe est une face externe d'un rail que comprend l'embase du connecteur,
- la face externe est une face opposée à une face interne du rail, la face interne étant pourvue d'une gorge apte à recevoir un élément du balai d'essuyage,
- l'ensemble délimite un espace interstitiel ménagé entre la surface externe du connecteur et la surface interne du bras d'entraînement. L'ensemble peut délimiter deux espaces interstitiels, chacun ménagé entre une le flan latéral du connecteur et un élément du bras d'entraînement sur lequel est fixé l'arbre,
- une première distance prise entre un passant par des centres des paliers de réception et un plan inférieur, qui relie des bords inférieurs des faces externes, est inférieure à une deuxième distance prise entre l'axe d'arbre et un plan supérieur, qui relie des bords supérieurs des surfaces internes.

L'invention porte aussi sur un balai d'essuyage équipé d'un tel ensemble.

L'invention porte encore sur un système d'essuyage comprenant un tel balai d'essuyage.

Ces dispositions sont telles que la liaison mécanique entre le connecteur et l'adaptateur est sécurisée en limitant le jeu transversal entre ces deux pièces, tout en permettant une rotation optimisée du connecteur autour de l'arbre du bras d'entraînement et en évitant un déboîtement du connecteur et de l'arbre entre eux. Avec une telle connexion, le balayage de la surface vitrée s'opère sans à-coups transversaux à chaque changement de sens de balayage du système d'essuyage.

D'autres caractéristiques, détails et avantages de l'invention ressortiront plus clairement à la lecture de la description donnée ci-après, à titre indicatif, en relation avec les figures suivantes :
- la figure 1 est une vue en perspective d'un système d'essuyage selon l'invention,
- la figure 2 est une vue en perspective d'une coupe médiane et longitudinale d'un connecteur selon l'invention qui participe du système d'essuyage illustré sur la figure 1,
- la figure 3 est une vue en perspective du connecteur illustré sur la figure 2,
- la figure 4 est une vue d'une coupe médiane et transversale du connecteur illustré sur les figures 2 et 3,
- la figure 5 est une vue de détail de la coupe médiane et transversale du connecteur illustrée sur les figures 2 à 4,
- la figure 6 est une vue partielle et en perspective d'un bras d'entraînement de la présente invention qui est destiné à porter le connecteur illustré sur les figures 2 à 5,
- la figure 7 est une vue partielle et en perspective éclatée d'un ensemble formé par le connecteur illustré sur les figures 2 à 5, d'un balai d'essuyage prévu pour être porté par le connecteur et du bras d'entraînement représenté sur la figure 6.

Il faut tout d'abord noter que les figures exposent l'invention de manière détaillée pour sa mise en œuvre, et que ces figures peuvent également servir à mieux définir l'invention le cas échéant.

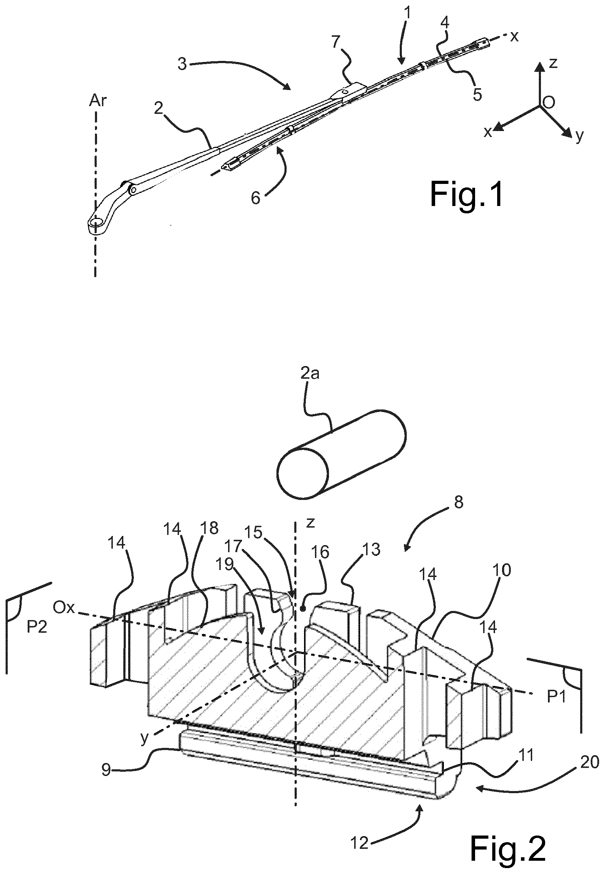

Sur les figures, les dénominations longitudinale, latérale, transversale, verticale, dessus, dessous, se réfèrent à l'orientation d'un balai d'essuyage 1 illustré sur la figure 1. Une direction longitudinale correspond à un axe longitudinal X selon lequel le balai d'essuyage 1 s'étend. Une direction transversale correspond à celle d'un axe transversal Y qui est perpendiculaire à l'axe longitudinal X et à un axe de rotation Aᵣ d'un bras d'entraînement 2 constitutif d'un système d'essuyage 3. Une direction verticale, parallèle à celle d'un axe vertical Z, et les dénominations supérieure ou inférieure se rapportent à des orientations parallèles à l'axe de rotation Aᵣ du bras d'entraînement 2 du système d'essuyage 3, la dénomination inférieure contenant le plan du pare-brise.

Les directions évoquées ci-dessus sont illustrées dans un repère orthonormé Oxyz représenté sur les figures. Dans ce repère, l'axe Ox représente la direction longitudinale, l'axe Oy représente la direction transversale, et l'axe Oz représente la direction verticale.

Sur la figure 1, un véhicule automobile est couramment équipé du système d'essuyage 3 pour évacuer une eau et/ou des salissures présentes sur une surface vitrée, notamment une lunette arrière du véhicule automobile. Le système d'essuyage 3 comprend un bras d'entraînement 2 qui est apte à effectuer un mouvement de va-et-vient angulaire le long et au-dessus de la surface vitrée. La surface vitrée est indifféremment un pare-brise avant ou une lunette arrière équipant le véhicule automobile.

Le système d'essuyage 3 comprend aussi le balai d'essuyage 1 qui s'étend selon un axe principal, dit axe longitudinal X parallèle à l'axe Ox. Le balai d'essuyage 1 comprend au moins un déflecteur d'air 4 et une lame racleuse 5. Le déflecteur d'air 4 est prévu pour transformer une pression appliquée par un flux d'air circulant le long de la surface vitrée en une force d'appui du balai d'essuyage 1 contre la surface vitrée du véhicule automobile. La lame racleuse 5 est la pièce du balai d'essuyage 1 en contact direct avec la surface vitrée pour évacuer l'eau et/ou les salissures présentes sur ce dernier. Le déflecteur d'air 4 et la lame racleuse 5 forment un ensemble semi-rigide 6 qui est porté par un dispositif de connexion 7, interposé entre le bras d'entraînement 2 et l'ensemble semi-rigide 6.

Le dispositif de connexion 7 assure une liaison mécanique entre le bras d'entraînement 2 et le balai d'essuyage 1 et permet ainsi de séparer le balai d'essuyage 1 du bras d'entraînement 2, en vue d'un remplacement du balai d'essuyage 1.

En se reportant maintenant à la figure 2, le dispositif de connexion 7 comprend par exemple un connecteur 8 représenté selon une coupe longitudinale médiane, le long de l'axe longitudinal Ox du balai d'essuyage 1. Le connecteur 8 comprend une embase 9, qui s'étend selon les directions longitudinale et transversale, et un corps 10 qui s'étend, au-dessus de l'embase 9, sensiblement selon la direction verticale. Selon le mode de réalisation représenté sur les figures, le connecteur 8, pris dans son ensemble, présente un premier plan de symétrie P₁, longitudinal et vertical, parallèle au plan Oxz du repère orthonormé défini plus haut, et sensiblement médian selon la direction transversale. Selon un mode de réalisation de l'invention, le connecteur 8 est réalisé par moulage d'un matériau polymère, par exemple un matériau de la famille des Polyoxyméthylènes, connue sous l'acronyme POM, ou par moulage d'un mélange de matériaux polymères, par exemple un mélange de polymères de la famille des polycarbonates et de la famille des Acrylonitrile Butadiène Styrène, connue sous l'acronyme ABS. D'autres matériaux connus de l'homme du métier comme le PBT 30GF peuvent également être utilisés.

L'embase 9 comporte des moyens de solidarisation ou de fixation du connecteur 8 au balai d'essuyage 1. Ces moyens de solidarisation prennent la forme d'une première et d'une deuxième gorge 11 ménagées dans les parties latérales inférieures de l'embase 9, dont chacune délimite, en partie inférieure latérale de cette embase 9, un crochet 12 apte à venir en prise sur le balai d'essuyage 1. Seule une gorge 11 est représentée sur la figure 1, la deuxième gorge étant ménagée sur la partie symétrique de l'embase 9 par rapport au premier plan de symétrie P₁, longitudinal vertical, du connecteur 8.

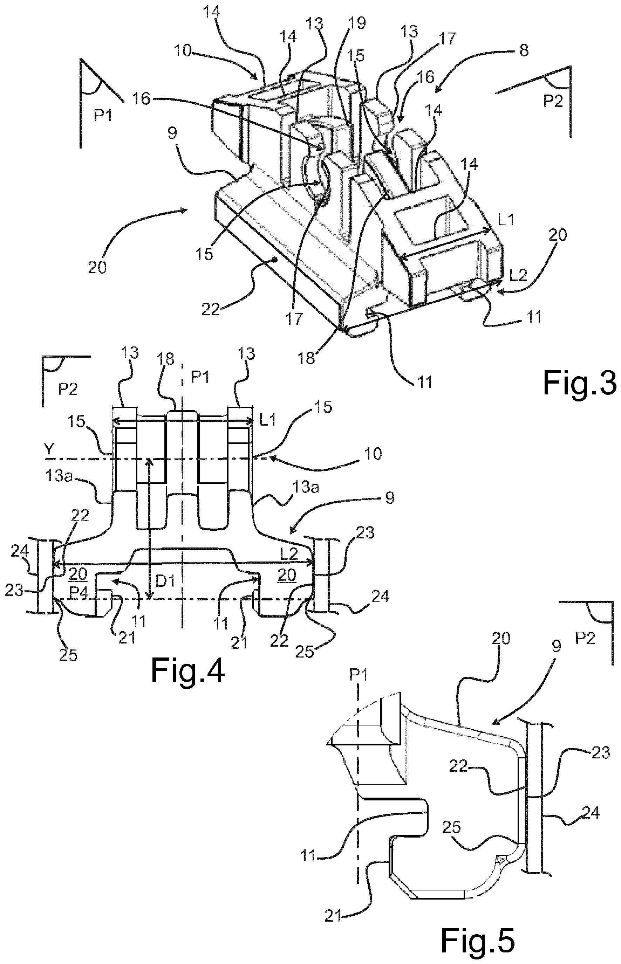

Le corps 10, avantageusement issu de matière avec l'embase 9, s'étend au-dessus de cette dernière selon la direction verticale. En se reportant également sur les figures 3 et 4, le corps 10 présente une première largeur L₁ selon la direction transversale inférieure à une deuxième largeur L₂ selon la direction transversale de l'embase 9.

Le corps 10 présente par ailleurs une dimension longitudinale sensiblement égale ou supérieure à la dimension longitudinale de l'embase 9. Selon le mode de réalisation de l'invention illustré sur les figures, la dimension longitudinale du corps 10 est supérieure à celle de l'embase 9, et le connecteur 8 présente un second plan de symétrie P₂, transversal et vertical, parallèle au plan Oyz du repère orthonormé défini plus haut et sensiblement médian selon l'axe longitudinal Ox.

Symétriquement disposés par rapport au premier plan de symétrie P₁ du connecteur 8, le corps 10 comporte des premier et deuxième flancs latéraux 13, sensiblement verticaux. Chacun de ces flancs latéraux 13 est sensiblement plan, de faible épaisseur selon la direction transversale, et la première largeur L₁ prise entre des surfaces externes 13a de ces deux flancs latéraux 13 représente la dimension, selon la direction transversale, du corps 10 du connecteur 8. Les premier et deuxième flancs latéraux 13 délimitent ainsi, entre eux, un volume intérieur du connecteur 8. Vers les extrémités longitudinales du corps 10, les premier et deuxième flancs latéraux 13 sont reliés entre eux par un ensemble de nervures 14, qui jouent notamment un rôle de renfort du corps 10. Plus particulièrement, le connecteur 8 comporte deux couples de nervures identiques 14 qui sont sont ménagés symétriquement par rapport à un plan médian transversal du connecteur, ce plan médian étant parallèle au second plan de symétrie P₂.

Comme le montre la figure 2, chacun des premier et deuxième flancs latéraux 13 présente sensiblement, vu de côté, un profil tel que la surface supérieure de chacun de ces flancs latéraux 13, en sa partie centrale selon la direction longitudinale du connecteur 8, forme une pente descendante en direction de chacune de leurs extrémités longitudinales. Cette forme permet à la fois d'alléger le connecteur 8, et de faciliter son assemblage avec le bras d'entraînement 2.

A travers chacun du premier et du deuxième flanc latéral 13 est ménagé un palier de réception 15 d'un arbre 2a solidaire du bras d'entraînement 2 du système d'essuyage 3. Un premier palier de réception 15 est ainsi ménagé dans le premier flanc latéral 13, et un deuxième palier de réception 15 peut être ménagé dans le deuxième flanc latéral 13. Chacun des paliers de réception 15 a une forme sensiblement cylindrique et est traversant, c'est-à-dire qu'il s'étend transversalement sur toute l'épaisseur de chacun des flancs latéraux 13. Le diamètre intérieur de chacun des paliers de réception 15 est défini par rapport à un diamètre moyen de l'arbre 2a solidaire du bras d'entraînement 2 auquel le connecteur 8 est destiné à être connecté. Les centres des deux paliers de réception 15 respectivement agencés dans le premier flanc latéral 13 et dans le deuxième flanc latéral sont alignés selon l'axe transversal Y parallèle à la direction de l'axe Oy du repère orthonormé défini plus haut. L'axe transversal Y matérialise l'axe de rotation du balai d'essuyage 1 par rapport au bras d'entraînement 2, une fois que l'arbre 2a est accueilli à l'intérieur des paliers de réception 15 du connecteur 8.

Chacun des paliers de réception 15 est placé sensiblement, selon la direction longitudinale, dans la zone centrale du flanc latéral correspondant. Selon le mode de réalisation illustré sur les figures, l'axe transversal Y selon lequel les centres de ces paliers de réception 15 sont alignés est donc compris à l'intérieur du deuxième plan de symétrie P₂, transversal vertical, du connecteur 8. Selon la direction verticale, chacun des paliers de réception 15 s'étend avantageusement sensiblement en zone centrale du corps 10 du connecteur 8. Chacun de ces paliers de réception 15 est donc agencé, sur l'un ou l'autre des premier ou deuxième flancs latéraux 13, de telle manière que, d'une part, il subsiste de la matière du flanc latéral 13 correspondant au-dessus du palier de réception 15, et de telle manière que, d'autre part, il subsiste de la matière du flanc latéral 13 correspondant au-dessous dudit palier de réception 15, entre son point le plus bas et la face supérieure de l'embase 9 du connecteur 8.

Pour permettre l'accueil et le maintien de l'arbre 2a solidaire du bras d'entraînement 2 dans le connecteur 8, c'est-à-dire, par exemple simultanément dans les paliers de réception 15, respectivement agencés dans le premier et dans le deuxième flanc latéral 13, une ouverture d'entrée 16 est ménagée au droit de chacun de ces paliers de réception 15, au-dessus de ces derniers. La dimension longitudinale de chacune des ouvertures d'entrée 16 est inférieure au diamètre intérieur du palier de réception 15 auquel l'ouverture d'entrée 16 donne accès, et dans lequel l'ouverture d'entrée 16 débouche. En d'autres termes, chaque ouverture d'entrée 16 forme un cône d'accès au palier de réception 15 correspondant. Une première ouverture d'entrée 16 forme ainsi un cône d'accès au premier palier de réception 15 agencé dans le premier flanc latéral 13, et une deuxième ouverture d'entrée forme un cône d'accès au deuxième palier de réception agencé dans le deuxième flanc latéral. Ainsi, lorsque l'arbre 2a solidaire d'un bras d'entraînement 2 du système d'essuyage 3 est accueilli simultanément dans les paliers de réception 15, ledit arbre 2a y est ensuite maintenu selon la direction verticale Oz. Afin de faciliter l'insertion de l'arbre 2a dans les ouvertures d'entrée 16, et la mise en place de cet arbre 2a dans les paliers de réception 15, des chanfreins 17 sont formés sur chacune des arêtes d'entrée bordant chacune des ouvertures d'entrée 16. La plus petite dimension longitudinale de l'ouverture d'entrée 16 est strictement inférieure au diamètre de l'arbre 2a.

Comme illustré par les figures 2 ou 3, le corps 10 du connecteur 8 comporte en outre, au sein du volume intérieur délimité par les premier et deuxième flancs latéraux 13, une joue de guidage 18 qui s'étend sensiblement longitudinalement et verticalement, à partir de la face supérieure de l'embase 9. Selon le mode de réalisation illustré par les figures, la joue de guidage 18 est placée, selon la direction transversale, sensiblement en partie médiane du volume intérieur délimité par les deux flancs latéraux 13. Elle s'étend donc ici sensiblement selon le premier plan de symétrie P₁, longitudinal vertical, du connecteur 8.

La joue de guidage 18 est également avantageusement placée en situation sensiblement centrale selon la direction longitudinale du connecteur 8. Avantageusement, le profil de la surface supérieure de la joue de guidage 18 est sensiblement similaire à celui d'au moins un des premier et/ou deuxième flancs latéraux 13. Selon un mode de réalisation de l'invention, la dimension de la joue de guidage 18 selon la direction verticale est toutefois inférieure à celle de chacun des flancs latéraux 13, mesurée en leur partie centrale selon l'axe longitudinal Ox.

Sensiblement en partie centrale selon la direction longitudinale, une encoche de guidage 19 est ménagée en partie supérieure de la joue de guidage 18. Cette encoche de guidage 19 débouche à la surface supérieure de la joue de guidage 18. Plus précisément, l'encoche de guidage 19 est agencée de telle manière qu'elle forme, en sa partie inférieure, sensiblement un demi-cylindre centré sur l'axe transversal Y, et dont le diamètre est supérieur à celui desdits paliers de réception 15. Selon le mode de réalisation illustré sur les figures, cette partie demi-cylindrique se prolonge verticalement, vers la surface supérieure de la joue de guidage 18, sur une dimension longitudinale sensiblement égale à son diamètre. Selon d'autres modes de réalisation alternatifs, l'encoche de guidage 19 peut présenter, en direction de la surface supérieure de la joue de guidage 18, un léger évasement.

En se reportant également sur les figures 4 et 5, l'embase 9 comprend deux rails 20 qui sont parallèles l'un à l'autre et s'étendent selon la direction longitudinale Ox. Chaque rail 20 comprend une face interne 21 qui est ménagée en vis-à-vis du premier plan de symétrie P₁ du connecteur 8 et une face externe 22 qui est tournée vers l'environnement extérieur du connecteur 8. La face interne 21 et la face externe 22 sont avantageusement parallèles l'une à l'autre et parallèles au premier plan de symétrie P₁. Les faces externes 22 des deux rails 20 sont distantes l'une de l'autre de la deuxième largeur L₂ qui est supérieure à la première largeur L₁.

La face interne 21 est la face du rail 20 à travers laquelle est ménagée l'une des gorges 11. Le fait que la deuxième largeur L₂ soit supérieure à la première largeur L₁ permet au connecteur 8 de disposer de rails 20 d'une épaisseur transversale conséquente pour sécuriser un maintien du balai d'essuyage 1 à l'intérieur des gorges 11.

La face externe 22 est une face du rail 20 qui est par exemple polie, notamment à l'issue d'un traitement pour rendre la face externe 22 la plus lisse possible.

Les figures 4 et 5 illustrent bien le dispositif de blocage 22, 23 d'un mouvement transversal du connecteur 8 par rapport au bras d'entraînement le long de l'axe d'arbre A1, confondu ici avec l'axe de transversal Y quand le connecteur 8 est monté sur le bras d'entraînement 2. Un tel dispositif de blocage est mis en œuvre par une association d'au moins une face externe 22 du connecteur 8 et au moins une surface interne 23 du bras d'entraînement 2. Cette association se fait par un contact physique direct de la surface externe 22 du connecteur 8 contre la surface interne 23 du bras, c'est-à-dire l'une en appuie sur l'autre.

La distance qui sépare la face extérieure du flan latéral 13a délimitant le corps 10 et la surface interne 23 du bras d'entraînement, au-dessus de l'embase 9, forme un espace interstitiel, où la surface interne 23 du bras d'entraînement n'est pas en contact direct avec le flan latéral 13a. Un tel espace interstitiel est situé au-dessus de chacun des rails 20 délimitant l'embase 9.

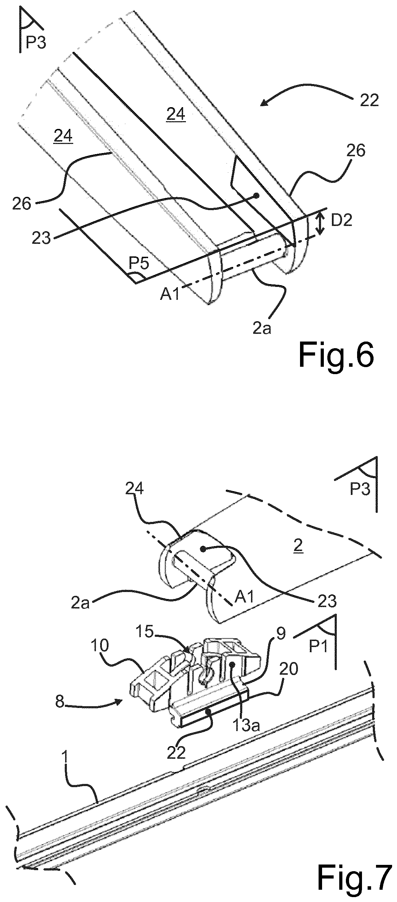

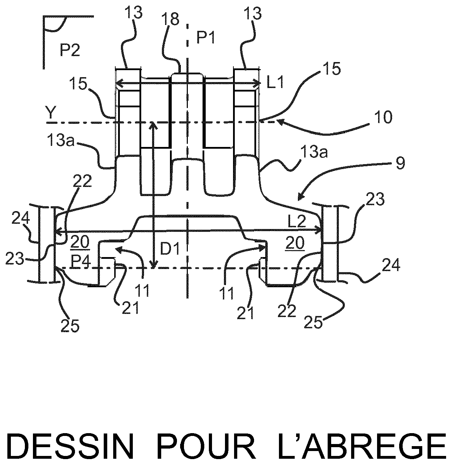

Sur la figure 6, le bras d'entraînement 22 comprend au moins une surface interne 23 qui est ménagée sur au moins un élément 24 porteur de l'arbre 2a. La surface interne 23 est disposée en vis-à-vis de l'arbre 2a. La surface interne 23 est plane est parallèle à un troisième plan de symétrie P₃. Le troisième plan P₃ est un plan longitudinal dans lequel le bras d'entraînement s'étend. L'élément 24 est par exemple une des deux platines entre lesquelles l'arbre 2a est rapporté. Préférentiellement, le bras d'entraînement 22 comprend deux surfaces internes 23 parallèles l'une à l'autre et parallèles au troisième plan de symétrie P₃ lorsque le connecteur 8 est porté par l'arbre 2a. La surface interne 23 est une surface du bras d'entraînement 2 qui est polie, notamment à l'issue d'un traitement pour rendre la surface interne 23 la plus lisse possible. La face externe 22 du connecteur 8 et la surface interne 23 du bras d'entraînement 2 sont prévues pour venir en contact l'une avec l'autre lorsque le connecteur 8 est rapporté sur l'arbre 2a, c'est-à-dire quand le premier plan de symétrie P₁ et le troisième plan de symétrie P₃ sont mis en juxtaposition l'un avec l'autre. Le troisième plan de symétrie P₃ est orthogonal à un axe d'arbre A₁ selon lequel l'arbre 2a s'étend.

La face externe 22 du connecteur 8 et la surface interne 23 du bras d'entraînement 2 forment conjointement le dispositif de blocage 22, 23 d'un mouvement transversal du connecteur 8 le long de l'axe d'arbre A₁. La face externe 22 du connecteur 8 et la surface interne 23 du bras d'entraînement 2 forment également conjointement un dispositif de blocage 22, 23 d'un mouvement en rotation du connecteur 8 autour d'un axe contenu à l'intérieur du troisième plan de symétrie P3 et orthogonal à l'axe d'arbre A₁. Un empêche ainsi le balai d'essuyage de twister au bout du bras d'entraînement.

D'une manière générale, le dispositif de blocage 22, 23 interdit aussi un déboîtement du connecteur 8 et de l'arbre 2a à partir d'un maintien du connecteur 8 dans le troisième plan de symétrie P₃ du connecteur 8 par l'intermédiaire de la face externe 22 du connecteur 8 et de la surface interne 23 du bras d'entraînement 2, qui sont en contact l'une avec l'autre lors dudit mouvement de rotation. Un tel blocage n'empêche pas un mouvement en rotation du connecteur 8 autour de l'axe d'arbre A₁, un tel mouvement étant d'ailleurs facilité par le caractère lisse de la face externe 22 du connecteur 8 et de la surface interne 23 du bras d'entraînement 2. Ces dispositions sont telles que le dispositif de blocage 22, pérennise une fixation du connecteur 8 autour de l'arbre 2a.

Enfin, on notera aussi en se reportant conjointement sur les figures 4 et 6, une première distance D₁ prise entre l'axe transversal Y, passant par les centres des paliers de réception 15, et un plan inférieur P₄, reliant des bords inférieurs 25 des faces externes 22, est inférieure à une deuxième distance D₂ prise entre l'axe d'arbre A₁ et un plan supérieur P₅, reliant des bords supérieurs 26 des surfaces internes 23.

Selon une forme de réalisation de la présente invention, la face externe 22 du connecteur 8 et la surface interne 23 du bras d'entraînement 2 sont d'une conformation et de dimensions identiques. Notamment, la face externe 22 du connecteur 8 et la surface interne 23 du bras d'entraînement 2 sont agencées en parallélogramme.

## Revendications

1. Ensemble (2, 8) formé d'un bras d'entraînement (2) et d'un connecteur (8), le connecteur (8) étant pourvu d'au moins un palier de réception (15) d'un arbre (2a) solidaire du bras d'entraînement (2), le connecteur (8) comprenant une embase (9) destinée à porter un balai d'essuyage (1) et surmontée d'un corps (10) comportant au moins deux surfaces externes (13a) distantes l'une de l'autre d'une première largeur (L₁), l'embase (9) comportant au moins deux faces externes (22) distantes l'une de l'autre d'une deuxième largeur (L₂) qui est supérieure à la première largeur (L₁), l'arbre (2a) s'étendant selon un axe d'arbre (A₁) entre des surfaces internes (23) du bras d'entraînement (2), **caractérisé en ce que** l'ensemble (2, 8) est équipé d'un dispositif de blocage (22, 23) d'un mouvement transversal du connecteur (8) le long de l'axe d'arbre (A₁) qui associe au moins une face externe (22) et au moins une surface interne (23) par contact l'une avec l'autre.

2. Ensemble (2, 8) selon la revendication 1, dans lequel le dispositif de blocage (22, 23) est un dispositif de blocage d'un mouvement en rotation du connecteur (8) autour d'un axe orthogonal à l'axe d'arbre (A₁) formé conjointement par la face externe (22) du connecteur (8) et la surface interne (23) du bras d'entraînement (2).

3. Ensemble (2, 8) selon la revendication 1 ou 2, dans lequel le dispositif de blocage (22, 23) comprend deux faces externes (22) du connecteur (8) et deux surfaces internes (23) du bras d'entraînement (2).

4. Ensemble (2, 8) selon l'une quelconque des revendications 1 à 3, dans lequel la face externe (22) et la surface interne (23) sont parallèles l'une à l'autre et parallèle à un premier plan de symétrie (P₁) du connecteur (8).

5. Ensemble (2, 8) selon l'une quelconque des revendications 1 à 4, dans lequel la face externe (22) et la surface interne (23) sont polies.

6. Ensemble (2, 8) selon l'une quelconque des revendications 1 à 5, dans lequel la face externe (22) et la surface interne (23) sont conformées en un parallélogramme.

7. Ensemble (2, 8) selon l'une quelconque des revendications 1 à 6, dans lequel la face externe (22) est une face externe d'un rail (20) que comprend l'embase (9) du connecteur (8).

8. Ensemble (2, 8) selon la revendication 7, dans lequel la face externe (22) est une face opposée à une face interne (21) du rail (20), la face interne (21) étant pourvue d'une gorge (11) apte à recevoir un élément du balai d'essuyage (1).

9. Ensemble (2, 8) selon l'une quelconque des revendications précédentes, dans lequel l'ensemble (2, 8) délimite un espace interstitiel ménagé entre la surface externe (13a) du connecteur (8) et la surface interne (23) du bras d'entraînement.

10. Ensemble (2, 8) selon l'une quelconque des revendications précédentes, dans lequel une première distance (D₁) prise entre un axe passant par des centres des paliers de réception (15) et un plan inférieur (P₄), qui relie des bords inférieurs (25) des faces externes (22), est inférieure à une deuxième distance (D₂) prise entre l'axe d'arbre (A₁) et un plan supérieur (P₅), qui relie des bords supérieurs (26) des surfaces internes (23).

11. Système d'essuyage (3) comprenant un ensemble selon l'une quelconque des revendications précédentes et un balai d'essuyage (1).

## Patentansprüche

1. Anordnung (2, 8), die von einem Antriebsarm (2) und einem Verbinder (8) gebildet wird, wobei der Verbinder (8) mit wenigstens einem Lager (15) zur Aufnahme einer Welle (2a) versehen ist, die mit dem Antriebsarm (2) fest verbunden ist, wobei der Verbinder (8) ein Unterteil (9) umfasst, das dazu bestimmt ist, ein Wischblatt (1) zu tragen, und von einem Körper (10) überragt wird, der wenigstens zwei Außenflächen (13a) aufweist, die um eine erste Breite (L₁) voneinander beabstandet sind, wobei das Unterteil (9) wenigstens zwei Außenseiten (22) aufweist, die um eine zweite Breite (L₂) voneinander beabstandet sind, welche größer als die erste Breite (L₁) ist, wobei sich die Welle (2a) entlang einer Wellenachse (A₁) zwischen Innenflächen (23) des Antriebsarmes (2) erstreckt, **dadurch gekennzeichnet, dass** die Anordnung (2, 8) mit einer Vorrichtung zur Blockierung (22, 23) einer Querbewegung des Verbinders (8) entlang der Wellenachse (A₁) ausgestattet ist, welche wenigstens eine Außenseite (22) und wenigstens eine Innenfläche (23) durch Kontakt miteinander in Verbindung bringt.

2. Anordnung (2, 8) nach Anspruch 1, wobei die Blockiervorrichtung (22, 23) eine Vorrichtung zur Blockierung einer Drehbewegung des Verbinders (8) um eine zu der Wellenachse (A₁) orthogonale Achse ist, die von der Außenseite (22) des Verbinders (8) und der Innenfläche (23) des Antriebsarmes (2) gemeinsam gebildet wird.

3. Anordnung (2, 8) nach Anspruch 1 oder 2, wobei die Blockiervorrichtung (22, 23) zwei Außenseiten (22) des Verbinders (8) und zwei Innenflächen (23) des Antriebsarmes (2) umfasst.

4. Anordnung (2, 8) nach einem der Ansprüche 1 bis 3, wobei die Außenseite (22) und die Innenfläche (23) parallel zueinander und parallel zu einer ersten Symmetrieebene (P₁) des Verbinders (8) sind.

5. Anordnung (2, 8) nach einem der Ansprüche 1 bis 4, wobei die Außenseite (22) und die Innenfläche (23) poliert sind.

6. Anordnung (2, 8) nach einem der Ansprüche 1 bis 5, wobei die Außenseite (22) und die Innenfläche (23) parallelogrammförmig ausgebildet sind.

7. Anordnung (2, 8) nach einem der Ansprüche 1 bis 6, wobei die Außenseite (22) eine Außenseite einer Schiene (20) ist, die von dem Unterteil (9) des Verbinders (8) umfasst wird.

8. Anordnung (2, 8) nach Anspruch 7, wobei die Außenseite (22) eine Seite ist, die einer Innenseite (21) der Schiene (20) gegenüberliegt, wobei die Innenseite (21) mit einer Rille (11) versehen ist, die geeignet ist, ein Element des Wischblattes (1) aufzunehmen.

9. Anordnung (2, 8) nach einem der vorhergehenden Ansprüche, wobei die Anordnung (2, 8) einen Zwischenraum begrenzt, der zwischen der Außenfläche (13a) des Verbinders (8) und der Innenfläche (23) des Antriebsarmes ausgebildet ist.

10. Anordnung (2, 8) nach einem der vorhergehenden Ansprüche, wobei ein erster Abstand (D₁) zwischen einer Achse, die durch Mittelpunkte der Aufnahmelager (15) verläuft, und einer unteren Ebene (P₄), welche untere Ränder (25) der Außenseiten (22) verbindet, kleiner ist als ein zweiter Abstand (D₂) zwischen der Wellenachse (A₁) und einer oberen Ebene (P₅), welche obere Ränder (26) der Innenflächen (23) verbindet.

11. Wischsystem (3), welches eine Anordnung nach einem der vorhergehenden Ansprüche und ein Wischblatt (1) umfasst.

## Claims

1. Assembly (2, 8) formed by a driving arm (2) and a connector (8), the connector (8) being provided with at least one receiving bearing (15) for receiving a shaft (2a) fixed to the driving arm (2), the connector (8) comprising a base (9) that is intended to bear a wiper (1) and is surmounted by a body (10) comprising at least two external surfaces (13a) that are spaced apart from one another by a first width (L₁), the base (9) comprising at least two external faces (22) that are spaced apart from one another by a second width (L₂) which is greater than the first width (L₁), the shaft (2a) extending along a shaft axis (A₁) between internal surfaces (23) of the driving arm (2), **characterized in that** the assembly (2, 8) is equipped with a blocking device (22, 23) for preventing a transverse movement of the connector (8) along the shaft axis (A₁), said blocking device (22, 23) joining at least one external face (22) and at least one internal surface (23) by contact with one another.

2. Assembly (2, 8) according to Claim 1, wherein the blocking device (22, 23) is a device for blocking a rotational movement of the connector (8) about an axis orthogonal to the shaft axis (A₁), said blocking device (22, 23) being formed jointly by the external face (22) of the connector (8) and the internal surface (23) of the driving arm (2).

3. Assembly (2, 8) according to Claim 1 or 2, wherein the blocking device (22, 23) comprises two external faces (22) of the connector (8) and two internal surfaces (23) of the driving arm (2).

4. Assembly (2, 8) according to any one of Claims 1 to 3, wherein the external face (22) and the internal surface (23) are parallel to one another and parallel to a first plane of symmetry (P₁) of the connector (8).

5. Assembly (2, 8) according to any one of Claims 1 to 4, wherein the external face (22) and the internal surface (23) are smoothed.

6. Assembly (2, 8) according to any one of Claims 1 to 5, wherein the external face (22) and the internal surface (23) are in the shape of a parallelogram.

7. Assembly (2, 8) according to any one of Claims 1 to 6, wherein the external face (22) is an external face of a rail (20) that the base (9) of the connector (8) comprises.

8. Assembly (2, 8) according to Claim 7, wherein the external face (22) is a face remote from an internal face (21) of the rail (20), the internal face (21) being provided with a groove (11) that is able to receive an element of the wiper (1).

9. Assembly (2, 8) according to any one of the preceding claims, wherein the assembly (2, 8) delimits an interstitial space formed between the external surface (13a) of the connector (8) and the internal surface (23) of the driving arm.

10. Assembly (2, 8) according to any one of the preceding claims, wherein a first distance (D₁) measured between an axis passing through the centres of the receiving bearings (15) and a lower plane (P₄) which connects lower edges (25) of the external faces (22) is less than a second distance (D₂) measured between the shaft axis (A₁) and an upper plane (P₅) which connects upper edges (26) of the internal surfaces (23).

11. Wiping system (3) comprising an assembly according to any one of the preceding claims and a wiper (1).
